(19) Europäisches Patentamt
European Patent Office
Office européen des brevets

(11) **EP 3 883 256 A1**

(12) **EUROPEAN PATENT APPLICATION**
published in accordance with Art. 153(4) EPC

(43) Date of publication:
**22.09.2021 Bulletin 2021/38**

(51) Int Cl.:
***H04N 21/8358*** (2011.01)   ***H04N 21/435*** (2011.01)

(21) Application number: **18940831.3**

(22) Date of filing: **10.12.2018**

(86) International application number:
**PCT/CN2018/120099**

(87) International publication number:
**WO 2020/103218 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2018 CN 201811385153**

(71) Applicant: **Wangsu Science & Technology Co., Ltd.**
**Shanghai 201800 (CN)**

(72) Inventor: **LIN, Xinjian**
**Shanghai 201800 (CN)**

(74) Representative: **De Arpe Tejero, Manuel**
**Arpe Patentes y Marcas**
**Alcalá, 26, 5ª Planta**
**28014 Madrid (ES)**

(54) **LIVE STREAM PROCESSING METHOD IN WEBRTC AND STREAM PUSHING CLIENT**

(57) The present disclosure provides a method for processing a live stream in web real-time communication (WebRTC) and a stream-pushing client. The method includes collecting an original live stream, and loading the original live stream into a temporary video tag, thereby playing the original live stream through the temporary video tag; creating a temporary image tag and loading a preset watermark image into the temporary image tag; creating a temporary drawing tag and drawing a current video frame in the temporary video tag and the preset watermark image in the temporary image tag into the temporary drawing tag; and acquiring a canvas video stream corresponding to the temporary drawing tag, and based on the canvas video stream and the original live stream, generating a watermark live stream with one or more added watermarks, wherein the watermark live stream is configured to be transmitted to a resource server through a WebRTC connection. The technical solution provided in the present disclosure may add corresponding copyright information to the live video stream in WebRTC communication.

Collecting an original live stream, and loading the original live stream into a temporary video tag, thereby playing the original live stream through the temporary video tag — S1

Creating a temporary image tag and loading a preset watermark image into the temporary image tag — S3

Creating a temporary drawing tag and drawing a current video frame in the temporary video tag and the preset watermark image in the temporary image tag into the temporary drawing tag — S5

Obtaining a canvas video stream corresponding to the temporary drawing tag, and based on the canvas video stream and the original live stream, generating a watermark live stream with one or more added watermark, wherein the watermark live stream is configured to be transmitted to a resource server through a WebRTC connection — S7

FIG. 2

**Description**

FIELD OF THE DISCLOSURE

The present disclosure generally relates to the technical field of Internet and, more particularly, relates to a method and a stream-pushing client for processing a live stream in WebRTC.

BACKGROUND

With continuous development of Internet and terminal devices, real-time video communication is becoming more popular. The web real-time communication (WebRTC) protocol is widely used in application scenarios such as network-based video conferencing, video calling, and the like due to its cross-platform and high real-time characteristics, and the solution for implementing a set of live interaction at a webpage client may become extremely simple by using the WebRTC. After recording a live video stream, a stream-pushing client may push data packets of the live video stream to a resource server through a WebRTC connection; similarly, a subsequent stream-pulling client may acquire the live video stream from the resource server based on the WebRTC connection, thereby implementing the live video function with a low-latency.

However, the copyright issue of the live video stream is increasingly noticeable while the WebRTC brings convenience to users. A large quantity of live video streams may be illegal acquired by criminals during the transmission process and then played on other platforms. Therefore, there is an urgent need for a method which may reflect the copyright of the live video stream.

BRIEF SUMMARY OF THE DISCLOSURE

The purpose of the present disclosure is to provide a method and a stream-pushing client for processing a live stream in WebRTC, which may add corresponding copyright information to the live stream in WebRTC communication.

To achieve the above-mentioned purpose, one aspect of the present disclosure provides a method for processing the live stream in WebRTC which may be applied to the stream-pushing client. The method may include collecting an original live stream, and loading the original live stream into a temporary video tag, thereby playing the original live stream through the temporary video tag; creating a temporary image tag and loading a preset watermark image into the temporary image tag; creating a temporary drawing tag and drawing a current video frame in the temporary video tag and the preset watermark image in the temporary image tag into the temporary drawing tag; and acquiring a canvas video stream corresponding to the temporary drawing tag, and based on the canvas video stream and the original live stream, generating a watermark live stream with one or more added watermarks, wherein the watermark live stream is configured to be transmitted to a resource server through a WebRTC connection.

To achieve the above-mentioned purpose, another aspect of the present disclosure provides a stream-pushing client. The stream-pushing client may include an original live stream collecting unit, configured to collect an original live stream and load the original live stream into a temporary video tag, thereby playing the original live stream through the temporary video tag; a watermark image loading unit, configured to create a temporary image tag and load a preset watermark image into the temporary image tag; an image drawing unit, configured to create a temporary drawing tag and draw a current video frame in the temporary video tag and the preset watermark image in the temporary image tag into the temporary drawing tag; and a watermark live stream generating unit, configured to acquire a canvas video stream corresponding to the temporary drawing tag and generate a watermark live stream with one or more added watermarks based on the canvas video stream and the original live stream, wherein the watermark live stream may be configured to be transmitted to the resource server through a WebRTC connection.

To achieve the above-mentioned purpose, another aspect of the present disclosure provides a stream-pushing client. The stream-pushing client includes a memory and a processor, wherein the memory is configured to store a computer program, and the computer program is configured to implement above-mentioned methods when executing by the processor.

It may be seen from the above that, in the technical solutions provided in the present disclosure, the stream-pushing client may load the original live stream into the pre-created temporary video tag after collecting the original live stream, and the temporary video tag may play the original live stream automatically. In the present disclosure, the copyright of the original live stream may be displayed by the manner of adding the watermark image into the original live stream. Specifically, the preset watermark image may be loaded to the temporary image tag by creating the temporary image tag; subsequently, based on the created temporary drawing tag, the current video frame and the preset watermark image of the original video stream may be respectively acquired from the temporary video tag and the temporary image tag, and the current video frame and the preset watermark image may be sequentially drawn in the temporary drawing tag, such that for each video picture frame, the corresponding preset watermark picture may be added. In such way, the video frames with one or more added watermarks image may be continuously generated in the temporary drawing tag, and the video frames may form the canvas video stream. Finally, the watermark live stream with one or more added watermarks may be generated based on the canvas video stream and the original live stream, and the watermark live stream may be configured to be transmitted to the resource server through the WebRTC connection. In such way, the live video stream subsequently transmitted on the network may carry the preset watermark image, thereby reflecting the copyright information of the live video stream.

BRIEF DESCRIPTION OF THE DRAWINGS

In order to clearly illustrate the technical solutions in the embodiments of the present disclosure, the accompanying drawings, which are required to be used in the description of disclosed embodiments, are briefly described hereinafter. Obviously, the accompanying drawings in the following description are merely certain embodiments of the present disclosure. Other accompanying drawings derived from such accompanying drawings may be acquired by those skilled in the art without creative work.

FIG. 1 illustrates an interface schematic of a stream-pushing client in the embodiments of the present disclosure;

FIG. 2 illustrates a schematic of steps of a method for processing a live stream in the embodiments of the present disclosure;

FIG. 3 illustrates a working schematic of a temporary video tag in the embodiments of the present disclosure;

FIG. 4 illustrates a working schematic of a Web Worker in the embodiments of the present disclosure;

FIG. 5 illustrates a schematic of pushing a watermark live stream in the embodiments of the present disclosure;

FIG. 6 illustrates a flow chart of a live stream processing in the embodiments of the present disclosure; and

FIG. 7 illustrates a structural schematic of a stream-pushing client in the embodiments of the present disclosure.

DETAILED DESCRIPTION

To more clearly describe the objectives, technical solutions and advantages of the present disclosure, the embodiments of the present disclosure are further illustrated in detail with reference to the accompanying drawings hereinafter.

The present disclosure provides a method for processing a live stream in WebRTC, which may be applied to a stream-pushing client. The stream-pushing client may be an electronic device having image and voice collection functions used by a video host. The electronic devices may be, for example, a smart phone, a tablet computer, a notebook computer, a personal computer, a smart wearable device (virtual reality glasses and a smart watch), and the like. Obviously, the stream-pushing client may also be software running in the above-mentioned electronic devices. For example, the stream-pushing clients may be an application program (app), a browser, a software development kit (SDK), and the like.

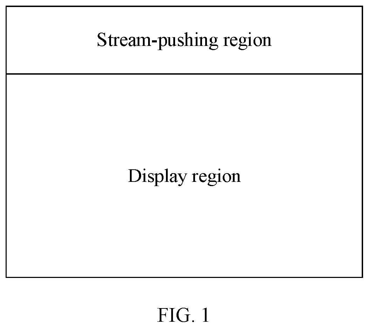

Referring to FIG. 1, in one embodiment, the interface of the stream-pushing client may include a stream-pushing region and a display region, where certain common webpage elements such as buttons, text boxes and the like may be distributed in the stream-pushing region, and the webpage elements may interact with the host to implement the collection and pushing of the live video stream. The display region may display the picture of the live video stream, which is finally pushed to the resource server, such that the host may pay real-time attention to whether the video picture pushed out is appropriate. The pushed live video stream may be a live video stream in which copyright information has been added.

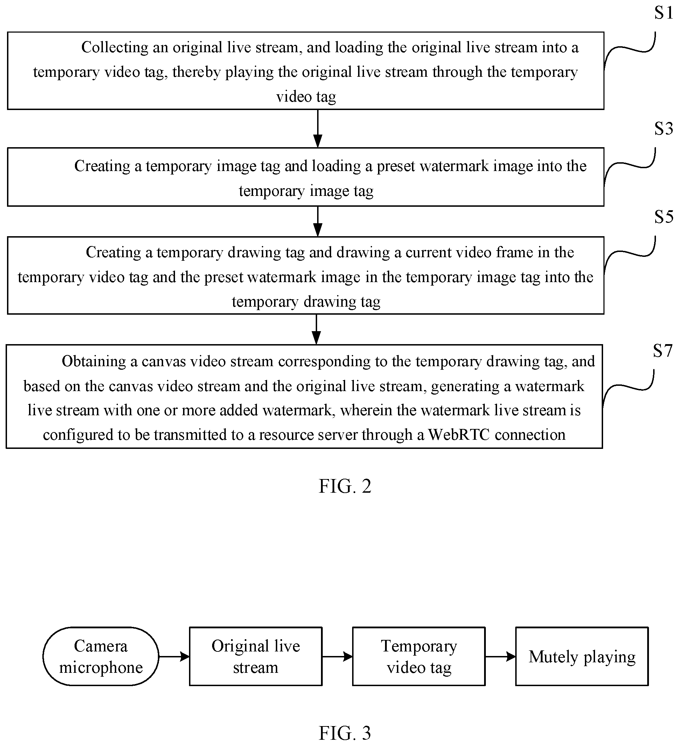

Referring to FIG. 2, the method for processing the live stream in the WebRTC may include the following steps.

At S1, an original live stream may be collected, and the original live stream may be loaded into a temporary video tag, thereby playing the original live stream through the temporary video tag.

With reference to FIG. 3, in one embodiment, the stream-pushing client may use a getUserMedia interface provided by a browser to start the built-in or external camera and microphone of the stream-pushing client to collect the live video picture of the host, thereby generating the original live stream. The original live stream may include synchronized video and audio tracks.

After collecting the original live stream, the temporary video tag may be created in the stream-pushing client and be configured to play the original live stream. Specifically, when the temporary video tag is created, the name of the temporary video tag may be specified. For example, the name of the temporary video tag may be TV. Furthermore, various play attributes of the temporary video tag may also be configured. For example, since the processing of the original video stream is actually performed in backend, the picture and audio should not be displayed on webpage frontend and the play volume of the temporary video tag may be adjusted to 0, thereby mutely playing the original live stream. Meanwhile, the temporary video tag may also be configured to be invisible (hidden), such that a user may not directly view the playing original live stream from outside. In addition, the play mode of the temporary video tag may also be configured as auto play; once the temporary video tag is loaded with the original live stream, the original live stream may be played automatically, and there is no need for the host to trigger a play button. Obviously, in practical applications, in order to prevent the temporary video tag from displaying abnormally when playing the original live stream, the size information of the original video stream may also be read, and the read size information may be configured to the temporary video tag synchronically. The size information may be, for example, the width and height of the video picture in the original live stream, and both the width and the height may be expressed by the quantity of pixels. After the above-mentioned configuration, the collected original live stream may be mutely played in the temporary video tag synchronically.

At S3, a temporary image tag may be created, and a preset watermark image may be loaded into the temporary image tag.

In one embodiment, the copyright information of the host may be marked in the original live stream by the manner of embedding the preset watermark image. The preset watermark image may be configured by the host or may be randomly generated by the stream-pushing client according to the information of the host. The preset watermark image may have its own loading address. The loading address may be, for example, the uniform resource locator (URL) of the image or the storage path of the image in the stream-pushing client. In such way, the temporary image tag may be created in the stream-pushing client and configured to load the preset watermark image. Specifically, the loading address of the preset watermark image may be associated with the temporary image tag, which may enable the temporary image tag to load the preset watermark image according to the loading address.

When creating the temporary image tag, the name of the temporary image tag may be specified. For example, the name of the temporary image tag may be TIM. In addition, the image display attribute of the temporary image tag may be configured. For example, the display size of the preset watermark image and the position information of the preset watermark image in the video picture may be configured in the temporary image tag, where the display size may be expressed by a width and a height, and both the width and the height may be expressed by the quantity of pixels. The position information may indicate a coordinate values corresponding to the vertex of an upper left corner when the preset watermark image is displayed in the video screen. The coordinate values may be determined in the coordinate system of the video picture and include an abscissa value and an ordinate value, and both the abscissa value and the ordinate value may be expressed by the sequence number of pixels. For example, the width and the height of the video picture of the original live stream are TCW and TCH, respectively. The coordinate values of the vertex of the upper left corner of the video picture of the original live stream may be (0,0), such that the coordinate values of the vertex of the lower right corner may be (TCW-1, TCH-1). In such coordinate system, the coordinate values corresponding to the vertex of the upper left corner of the preset watermark image may be identified, such that the coordinate values may be configured as the position information of the preset watermark image in the video picture. Therefore, an area occupied by the preset watermark image may be uniquely determined in the video picture according to the position information and the display size.

At S5, a temporary drawing tag may be created, and a current video frame in the temporary video tag and the preset watermark image in the temporary image tag may be drawn in the temporary drawing tag.

In one embodiment, after the original live stream and the preset watermark image are played and displayed through respective tags, a corresponding preset watermark image may be added for each frame of the video picture of the original live stream. Specifically, the temporary drawing tag may be created in the stream-pushing client, and the role of the temporary drawing tag may be used to sequentially draw the video frame and the preset watermark image of the original live stream. In such way, the video frame of the original live stream may be located in the lower layer of the temporary drawing tag, and the preset watermark image may be located in the upper layer of the temporary drawing tag, thereby generating the visual effect of covering the video frame with the preset watermark image.

In one embodiment, in order to draw the video frame and the preset watermark image sequentially, a preset instruction for returning a drawing context in the temporary drawing tag may be called. The preset instruction may be, for example, a getContext() instruction which may return a drawing context used on a canvas. To use the instruction normally, a drawing type is required to be specified on the canvas. Specifically, in one embodiment, the drawing type may be a 2d planar picture, so that the drawing type may be expressed by a parameter indicating the planar picture; for example, the parameter may be "2d". In such way, after the parameter indicating the planar picture is passed to the preset instruction, a planar picture rendering object CanvasRenderingContext2D corresponding to the temporary video tag may be acquired. In an application example, the planar picture rendering object may be expressed as the following manner:

$$TCC = TC.getContext\ ("2d"),$$

where TCC may represent the name of the planar picture rendering object, TC may represent the name of the temporary drawing tag, and 2d may represent the parameter indicating the planar picture.

In one embodiment, after the planar picture rendering object is acquired, the current video frame and the preset watermark image may be respectively acquired from the temporary video tag and the temporary image tag through the planar image rendering object, and the acquired current video frame and the acquired preset watermark image may be drawn into the temporary drawing tag. In an application example, the planar picture rendering object may sequentially draw the current video frame and the preset watermark image into the temporary drawing tag through a drawing instruction drawImage. Specifically, the image drawing may be performed by the drawing instruction of the planar picture rendering object in the following manner:

TCC.drawImage (TV, 0, 0, TCW, TCH),

TCC.drawImage (TIM, WX, WY, WW, WH),

where, TV may represent the name of the temporary video tag; (0,0) may represent the coordinate values of the vertex of the upper left corner of the current video frame; TCW and TCH may respectively represent the width and height of the current video frame; TIM may represent the name of the temporary image tag; (WX,WY) may represent the coordinate values of the upper left corner vertex of the preset watermark image in the coordinate system of the current video frame; and WW and WH may respectively represent the width and height of the preset watermark image.

It can be seen that the temporary video tag TV, the size information (TCW and TCH) of the video frame in the original video stream, and the starting position (0,0) of the video frame of the video frame in the original video stream may be marked in the planar picture rendering object, thereby acquiring the current video frame from the temporary video tag. Similarly, the temporary image tag TIM, the size information (WW and WH) of the preset watermark image, and the starting position (WX and WY) of the preset watermark image may be marked in the planar picture rendering object, thereby acquiring the preset watermark image from the temporary image tag. Finally, the acquired current video frame and the preset watermark image may be sequentially drawn into the temporary drawing tag, thereby forming the current video frame covered with the preset watermark image.

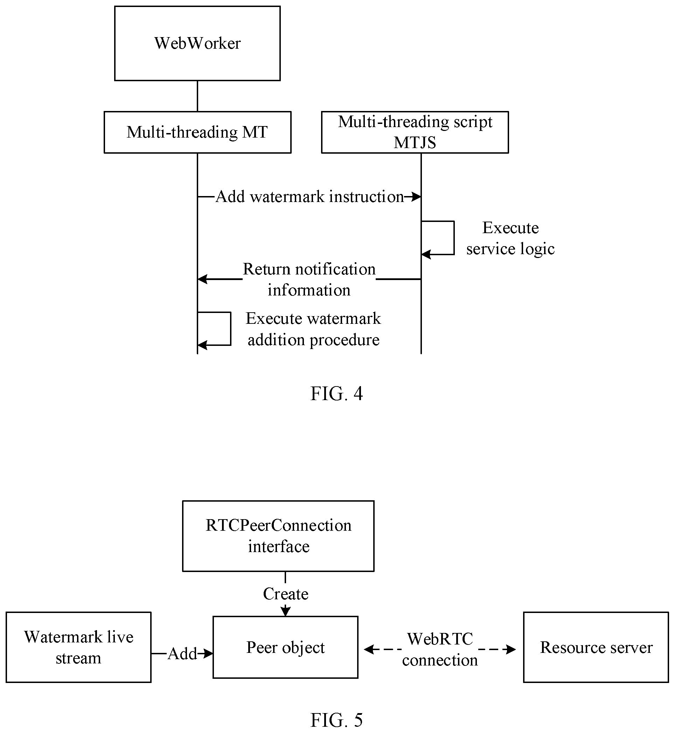

Referring to FIG. 4, in one embodiment, the above-mentioned process of adding the preset watermark image to the current video frame may be completed through the webpage work object WebWorker provided by a browser. Specifically, the stream-pushing client may internally call the webpage work object WebWorker provided by the browser and create one multi-threading MT through the webpage work object WebWorker. Furthermore, the stream-pushing client may also prepare a multi-threading script MTJS corresponding to the multi-threading in advance and edit a preset service logic in the multi-threading script MTJS. In such way, after starting the multi-threading MT, the instruction indicating the watermark addition may be passed to the preset script MTJS through the multi-threading MT. The instruction may be expressed as the following manner:

MT.postMessage (params),

where, postMessage may represent the instruction indicating the watermark addition, and params may represent parameters carried in the instruction.

After the instruction is received, the preset script MTJS may execute the preset service logic edited in advance in response to the instruction indicating the watermark addition, and after executing the preset service logic, the preset script MTJS may return notification information to the multi-threading. The notification information may indicate that the preset script MTJS has currently executed and completed its own service logic, and the multi-threading may start the process of adding the watermark. In such way, in response to the notification information, the multi-threading MT may draw the current video frame in the temporary video tag and the preset watermark image in the temporary image tag into the temporary drawing tag.

At S7, a canvas video stream corresponding to the temporary drawing tag may be acquired, a watermark live stream with one or more added watermarks may be generated based on the canvas video stream and the original live stream, and the watermark live stream may be configured to be transmitted to the resource server through the WebRTC connection.

In one embodiment, the video frames with one or more added watermarks images may be continuously generated in the temporary drawing tag according to the above-mentioned manner, and the video frames may form the canvas video stream. The video picture may only be processed in the temporary drawing tag and the corresponding audio information may not be added. Therefore, the canvas video stream and the audio information of the original live stream may be combined to form the watermark live stream with audio and visual information. Specifically, an audio track may be extracted from the original live stream, a video track may be extracted from the canvas video stream, and then the audio track and the video track may be merged to generate the watermark live stream with one or more added watermarks. In an application example, the audio track of the original live stream may be acquired by the following instruction:

$$AT = OS.getAudioTracks()[0]$$

where, AT may represent the extracted audio track, OS may represent the name of the original live stream, getAudioTracks() may represent the instruction to extract the audio track, and 0 may represent the first available audio track.

Furthermore, the video track of the canvas video stream may be extracted by the following instruction:

$$VT = CS.getVideoTracks()[0]$$

where, VT may represent the extracted video track, CS may represent the name of the canvas video stream, getVideoTracks() may represent the instruction to extract the video track, and 0 may represent the first available video track.

After the video track and the audio track are extracted, the audio track and the video track may be merged into the watermark live stream using a MediaStream instruction provided by the browser according to the following manner:

$$WS = MediaStream ([AT, VT])$$

where, WS may represent the name of the merged watermark live stream.

In one embodiment, after the watermark live stream is generated, the watermark live stream may be pushed to the resource server through the WebRTC connection. Specifically, referring to FIG. 5, the stream-pushing client may create a connection object Peer using an interface RTCPeerConnection which is provided by the browser to maintain the WebRTC connection, and add the watermark live stream to the connection object Peer. Next, the connection object Peer may establish the WebRTC connection with the resource server and push data packets of the watermark live stream to the resource server through the WebRTC connection. Specifically, the resource server may open a user datagram protocol (UDP) port or a transmission control protocol (TCP) port to wait for the data packets pushed by the stream-pushing client. In such way, the stream-pushing client may transmit the audio and video data packets of the watermark live stream to the UDP port or the TCP port of the resource server in real time.

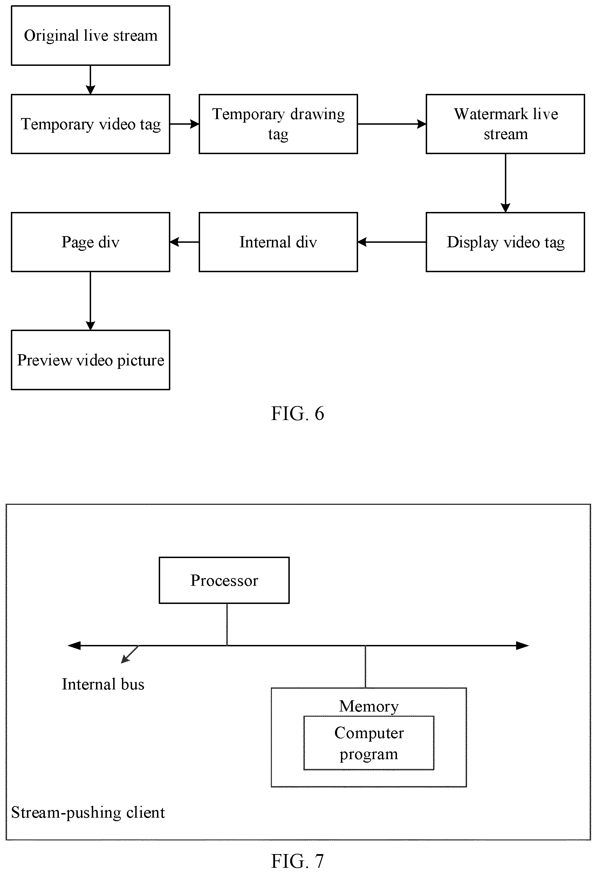

In one embodiment, after the watermark live stream is generated, the stream-pushing client may display the watermark live stream in the display region shown in FIG. 1 in real time. Specifically, referring to FIG. 6, after generating the watermark live stream, the stream-pushing client may create a display video tag, and the watermark live stream may be loaded into the display video tag, where the play attribute of the display video tag may be configured as visible, such that the host may directly view the picture of the watermark live stream from outside. Next, the stream-pushing client may create an internal container (internal div or division) and display the watermark live stream loaded in the display video tag into the internal container (internal div). Next, a browser webpage may display the internal container (internal div) of the watermark live stream through a callback, thereby filling an external container (page div) preset in the browser webpage with the internal container (internal div) displaying the watermark live stream. The external container (page div) may customize the effect style of the picture display in the display region shown in FIG. 1. It may be seen from the above, in FIG. 6, the content in the temporary video tag may not be viewed from the outside and may be configured to play mutely, which may mainly be configured to capture frame-by-frame video pictures by the planar picture drawing object when the original live stream is played mutely. However, the watermark live stream in the display video tag may be viewed in the display region, which may be configured to preview the video pictures with the watermark. The internal div may be configured to store the watermark live stream and may also be called back to the webpage client. In addition, the page div may be preset in the display region of the webpage client, such that the internal div may be embedded into the page div, thereby displaying the video pictures of the final watermark live stream in the display region.

The present disclosure further provides a stream-pushing client, and the stream-pushing client may include:

an original live stream collecting unit, configured to collect an original live stream and load the original live stream into a temporary video tag, thereby playing the original live stream through the temporary video tag;

a watermark image loading unit, configured to create a temporary image tag and load a preset watermark image into the temporary image tag;

an image drawing unit, configured to create a temporary drawing tag and draw a current video frame in the temporary video tag and the preset watermark image in the temporary image tag into the temporary drawing tag; and

a watermark live stream generating unit, configured to acquire a canvas video stream corresponding to the temporary drawing tag, and generate a watermark live stream with one or more added watermarks based on the canvas video stream and the original live stream, where the watermark live stream may be configured to be transmitted to the resource server through a WebRTC connection.

In one embodiment, the watermark image loading unit may include:
an address association module, configured to associate a loading address of the preset watermark image with the temporary image tag, which enables the temporary image tag to load the preset watermark image according to the loading address.

In one embodiment, the image drawing unit may include:

a webpage work object calling module, configured to call a webpage work object provided by the browser and create a multi-threading through the webpage work object; and

an instruction passing module, configured to start the multi-threading and pass the instruction indicating the watermark addition to the preset script through the multi-threading, where after the preset script executes a preset service logic in response to the instruction indicating the watermark addition, the preset script may return notification information to the multi-threading, such that in response to the notification information, the multi-threading may be enabled to draw the current video frame in the temporary video tag and the preset watermark image in the temporary image tag into the temporary drawing tag.

In one embodiment, the image drawing unit may include:

a planar image rendering object acquiring module, configured to call a preset instruction for returning a drawing context in the temporary drawing tag and pass the parameter indicating the planar picture to the preset instruction to acquire the planar picture rendering object corresponding to the temporary drawing tag; and

a drawing module, configured to respectively acquire the current video frame and the preset watermark image from the temporary video tag and the temporary image tag through the planar image rendering object, and draw the acquired current video frame and the preset watermark image into the temporary drawing tag.

In one embodiment, the image drawing unit may include:

a video information marking module, configured to mark the temporary video tag, the size information of the video frame in the original video stream, and the starting position information of the video frame in the original video stream in the planar picture rendering object, thereby acquiring the current video frame from the temporary video tag; and

an image information marking module, configured to mark the temporary image tag, the size information of the preset watermark image, and the starting position information of the preset watermark image in the planar picture rendering object, thereby acquiring the preset watermark image from the temporary image tag.

Referring to FIG. 7, the present disclosure further provides a stream-pushing client. The stream-pushing client may include a memory and a processor. The memory may be configured to store a computer program, and the above-mentioned processing method for the live stream in the WebRTC may be implemented when the computer program is executed by the processor. Specifically, as shown in FIG. 7, the stream-pushing client may include the processor, an internal bus, and the memory at a hardware level. The memory may include a random-access memory and a non-volatile memory. The processor may read a corresponding computer program from the non-volatile memory into the rando-access memory, and then execute the computer program. It should be understood by those skilled in the art that the structure shown in Fig.7 may be merely illustrative, which may not limit the structure of the above-mentioned identification device. For example, the stream-pushing client may further include more or less components than the structure shown in FIG. 7. For example, the stream-pushing client may further include other processing hardware including a graphics processing unit (GPU, an image processor), or may have a configuration different from the structure shown in FIG. 7. Obviously, in addition to software implementations, the preset disclosure may not exclude other implementations, such as logic devices, a combination of software and hardware, and the like.

In one embodiment, the processor may include a central processing unit (CPU) or a GPU, and obviously, may further other units which have logic processing capability, such as a single-chip microcomputer, a logic gate circuit, an integrated circuit, or other suitable combinations. The memory in one embodiment may be a storage device for storing information. In digital systems, a device which may store binary data may be the memory; in integrated circuits, a circuit with a storage function without physical form may also be the memory, such as RAM, FIFO, and the like; and in systems, a storage device with a physical form may also be called as the memory, and the like. The memory may also be implemented in a cloud storage manner during implementation, and the specific implementation manner may not be limited in the present disclosure.

It should be noted that, the specific implementation manner of the stream-pushing client in the present disclosure may refer to the method implementation manners, which may not be described in detail herein.

It may be seen from the above that, in the technical solutions provided in the present disclosure, the stream-pushing client may load the original live stream into the pre-created temporary video tag after collecting the original live stream, and the temporary video tag may play the original live stream automatically. In the present disclosure, the copyright of the original live stream may be displayed by the manner of adding the watermark image into the original live stream. Specifically, the preset watermark image may be loaded to the temporary image tag by creating the temporary image tag; subsequently, based on the created temporary drawing tag, the current video frame and the preset watermark image of the original video stream may be respectively acquired from the temporary video tag and the temporary image tag sequentially, and the current video frame and the preset watermark image may be sequentially drawn into the temporary drawing tag, such that the corresponding preset watermark picture may be added for each video picture frame. In such way, the video frames with one or more added watermarks images may be continuously generated in the temporary drawing tag, and the video frames may form the canvas video stream. Finally, the watermark live stream with one or more added watermarks may be generated based on the canvas video stream and the original live stream, and the watermark live stream may be pushed to the resource server through the WebRTC connection. Therefore, the live video stream subsequently transmitted on the network may carry the preset watermark image, thereby reflecting the copyright information of the live video stream.

Through the description of the above embodiments, those skilled in the art may clearly understand that each embodiment may be implemented by means of software and necessary universal hardware platforms, and obviously, may also be implemented by hardware. Based on such understanding, the above-mentioned technical solutions or portions of the solutions, which contribute to the existing technology, may be embodied in the form of software products essentially, which may be stored in a computer-readable storage medium, such as a ROM/RAM, a magnetic disc, an optical disc, and the like, and may include a plurality of instructions for enabling a computer device (which may be a personal computer, a server, or a network device, and the like) to perform the methods described in various embodiments or certain portions of the embodiments.

The above-mentioned embodiments may merely be preferred embodiments of the present disclosure and may not be intended to limit the present disclosure. Any modification, equivalent replacement, or improvement made within the spirit and principle of the present disclosure should be included in the protection scope of the present disclosure.

**Claims**

1. A method for processing a live stream in web real-time communication (WebRTC), comprising:

   collecting an original live stream, and loading the original live stream into a temporary video tag, thereby playing the original live stream through the temporary video tag;
   creating a temporary image tag and loading a preset watermark image into the temporary image tag;
   creating a temporary drawing tag and drawing a current video frame in the temporary video tag and the preset watermark image in the temporary image tag into the temporary drawing tag; and
   obtaining a canvas video stream corresponding to the temporary drawing tag, and based on the canvas video stream and the original live stream, generating a watermark live stream with one or more added watermarks, wherein the watermark live stream is configured to be transmitted to a resource server through a WebRTC connection.

2. The method according to claim 1, wherein playing the original live stream through the temporary video tag includes:
   configuring the temporary video tag to be invisible and mutely playing the original live stream through the temporary video tag.

3. The method according to claim 1, wherein loading the preset watermark image into the temporary image tag includes:
   associating a loading address of the preset watermark image to the temporary image tag, which enables the temporary image tag to load the preset watermark image according to the loading address.

4. The method according to claim 1 or claim 3, wherein when loading the preset watermark image into the temporary image tag, the method further includes:
   in the temporary image tag, configuring a display size of the preset watermark image and position information of the preset watermark image in a video picture.

5. The method according to claim 1, wherein drawing the current video frame in the temporary video tag and the preset watermark image in the temporary image tag into the temporary drawing tag includes:

   calling a webpage work object provided by a browser and creating multi-threading through the webpage work object;
   starting the multi-threading and passing an instruction indicating watermark addition to a preset script through the multi-threading, wherein after executing a preset service logic in response to the instruction indicating the watermark addition, the preset script returns notification information to the multi-threading; and
   in response to the notification information, drawing the current video frame in the temporary video tag and the preset watermark image in the temporary image tag into the temporary drawing tag by the multi-threading.

6. The method according to claim 1 or claim 5, wherein drawing the current video frame in the temporary video tag and the preset watermark image in the temporary image tag into the temporary drawing tag includes:

calling a preset instruction for returning a drawing context in the temporary drawing tag and passing a parameter indicating a planar picture to the preset instruction to acquire a planar picture rendering object corresponding to the temporary drawing tag; and

respectively acquiring the current video frame and the preset watermark image from the temporary video tag and the temporary image tag sequentially through the planar image rendering object and drawing the acquired current video frame and the acquired preset watermark image into the temporary drawing tag.

7. The method according to claim 6, wherein respectively acquiring the current video frame and the preset watermark image from the temporary video tag and the temporary image tag sequentially through the planar image rendering object includes:

marking the temporary video tag, size information of a video frame in the original video stream, and starting position information of the video frame in the original video stream into the planar picture rendering object, thereby acquiring the current video frame from the temporary video tag; and

marking the temporary image tag, size information of the preset watermark image, and starting position information of the preset watermark image into the planar picture rendering object, thereby acquiring the preset watermark image from the temporary image tag.

8. The method according to claim 1, wherein based on the canvas video stream and the original live stream, generating the watermark live stream with one or more added watermarks includes:

extracting an audio track from the original live stream, and extracting a video track from the canvas video stream; and

merging the audio track and the video track to generate the watermark live stream with one or more added watermarks.

9. The method according to claim 1, wherein after generating the watermark live stream with one or more added watermarks, the method further includes:

creating a connection object using an interface provided by a browser to maintain the WebRTC connection and adding the watermark live stream into the connection object; and

establishing the WebRTC connection by the connection object and the resource server and pushing data packets of the watermark live stream to the resource server through the WebRTC connection.

10. The method according to claim 1, wherein after generating the watermark live stream with one or more added watermarks, the method further includes:

creating a display video tag and loading the watermark live stream into the display video tag;

creating an internal container and displaying the watermark live stream loaded into the display video tag in the internal container; and

displaying the internal container of the watermark live stream by a browser webpage callback, thereby filling the internal container displaying the watermark live stream into an external container preset in the browser webpage.

11. A stream-pushing client, comprising:

a memory, configured to store computer programs; and

a processor, coupled with the memory and, when the computer programs being executed, the processor is configured to:

collect an original live stream and load the original live stream into a temporary video tag, thereby playing the original live stream through the temporary video tag;

create a temporary image tag and load a preset watermark image into the temporary image tag;

create a temporary drawing tag and draw a current video frame in the temporary video tag and the preset watermark image in the temporary image tag into the temporary drawing tag; and

obtain a canvas video stream corresponding to the temporary drawing tag and generate a watermark live stream with one or more added watermarks based on the canvas video stream and the original live stream, wherein the watermark live stream is configured to be transmitted to the resource server through a WebRTC connection.

12. The stream-pushing client according to claim 11, wherein the processor is further configured to:
associate a loading address of the preset watermark image with the temporary image tag to enable the temporary image tag to load the preset watermark image according to the loading address.

13. The stream-pushing client according to claim 11, wherein the processor is further configured to:

call a webpage work object provided by a browser and create multi-threading through the webpage work object; and

start the multi-threading and pass an instruction indicating watermark addition to a preset script through the multi-threading, wherein after executing a preset service logic in response to the instruction indicating the watermark addition, the preset script returns notification information to the multi-threading, which enables the multi-threading to respond to the notification information, thereby drawing the current video frame in the temporary video tag and the preset watermark image in the temporary image tag into the temporary drawing tag by the multi-threading.

14. The stream-pushing client according to claim 11 or claim 13, wherein the processor is further configured to:

call a preset instruction for returning a drawing context in the temporary drawing tag and pass a parameter indicating a planar picture to the preset instruction to acquire a planar picture rendering object corresponding to the temporary drawing tag; and

respectively acquire the current video frame and the preset watermark image from the temporary video tag and the temporary image tag sequentially through the planar image rendering object and draw the acquired current video frame and the acquired preset watermark image into the temporary drawing tag.

15. The stream-pushing client according to claim 14, wherein the processor is further configured to:

mark the temporary video tag, size information of a video frame in the original video stream, and starting position information of the video frame in the original video stream into the planar picture rendering object, thereby acquiring the current video frame from the temporary video tag; and

mark the temporary image tag, size information of the preset watermark image, and starting position information of the preset watermark image into the planar picture rendering object, thereby acquiring the preset watermark image from the temporary image tag.

16. A stream-pushing client, wherein:
the stream-pushing client includes a memory and a processor, wherein the memory is configured to store a computer program, and the computer program is configured to implement any one of claims 1 to 10 when executing by the processor.

Stream-pushing region

Display region

FIG. 1

S1

Collecting an original live stream, and loading the original live stream into a temporary video tag, thereby playing the original live stream through the temporary video tag

S3

Creating a temporary image tag and loading a preset watermark image into the temporary image tag

S5

Creating a temporary drawing tag and drawing a current video frame in the temporary video tag and the preset watermark image in the temporary image tag into the temporary drawing tag

S7

Obtaining a canvas video stream corresponding to the temporary drawing tag, and based on the canvas video stream and the original live stream, generating a watermark live stream with one or more added watermark, wherein the watermark live stream is configured to be transmitted to a resource server through a WebRTC connection

FIG. 2

Camera microphone → Original live stream → Temporary video tag → Mutely playing

FIG. 3

FIG. 4

FIG. 5

```
┌─────────────────────┐
│ Original live stream │
└──────────┬──────────┘
           │
           ▼
┌─────────────────────┐      ┌─────────────────────┐      ┌─────────────────────┐
│ Temporary video tag │─────▶│  Temporary drawing  │─────▶│   Watermark live    │
│                     │      │         tag         │      │       stream        │
└─────────────────────┘      └─────────────────────┘      └──────────┬──────────┘
                                                                      │
                                                                      ▼
┌─────────────────────┐      ┌─────────────────────┐      ┌─────────────────────┐
│      Page div       │◀─────│    Internal div     │◀─────│  Display video tag  │
└──────────┬──────────┘      └─────────────────────┘      └─────────────────────┘
           │
           ▼
┌─────────────────────┐
│ Preview video picture│
└─────────────────────┘
```

FIG. 6

```
┌─────────────────────────────────────────────────────────────────────┐
│                                                                       │
│                      ┌─────────────────────┐                          │
│                      │     Processor       │                          │
│                      └──────────┬──────────┘                          │
│                                 │                                     │
│        ◀────────────────────────┴──────────────────┬──────────────▶  │
│              ↙                                      │                  │
│      Internal bus                                   │                  │
│                                      ┌──────────────┴──────────────┐   │
│                                      │          Memory             │   │
│                                      │   ┌─────────────────────┐   │   │
│                                      │   │      Computer        │   │   │
│                                      │   │      program         │   │   │
│                                      │   └─────────────────────┘   │   │
│                                      └─────────────────────────────┘   │
│                                                                       │
│  Stream-pushing client                                                │
└─────────────────────────────────────────────────────────────────────┘
```

FIG. 7

## INTERNATIONAL SEARCH REPORT

| | International application No. |
|---|---|
| | **PCT/CN2018/120099** |

**A. CLASSIFICATION OF SUBJECT MATTER**

H04N 21/8358(2011.01)i; H04N 21/435(2011.01)i

According to International Patent Classification (IPC) or to both national classification and IPC

**B. FIELDS SEARCHED**

Minimum documentation searched (classification system followed by classification symbols)

H04N G06F

Documentation searched other than minimum documentation to the extent that such documents are included in the fields searched

Electronic data base consulted during the international search (name of data base and, where practicable, search terms used)

CNPAT, CNKI, WPI, EPODOC: 直播, 视频, 推流, 标签, 水印, 图, 加载, 帧, 绘制, 渲染, 版权, 音频, live, broadcast, stream, tag, watermark, frame, image, video, audio

**C. DOCUMENTS CONSIDERED TO BE RELEVANT**

| Category* | Citation of document, with indication, where appropriate, of the relevant passages | Relevant to claim No. |
|---|---|---|
| X | CN 108810654 A (WUHAN DOUYU NETWORK TECHNOLOGY CO., LTD.) 13 November 2018 (2018-11-13)<br>description, paragraphs [0002] and [0042]-[0114] | 1-16 |
| A | CN 105451035 A (BEIJING GUANGHUI HONGTU TECHNOLOGY CO., LTD.) 30 March 2016 (2016-03-30)<br>entire document | 1-16 |
| A | CN 103379325 A (CHANGSHU NANJING NORMAL UNIVERSITY DEVELOPMENT RESEARCH INSTITUTE CO., LTD.) 30 October 2013 (2013-10-30)<br>entire document | 1-16 |
| A | US 2018285537 A1 (CISCO TECHNOLOGY, INC.) 04 October 2018 (2018-10-04)<br>entire document | 1-16 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 July 2019** | **26 August 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/120099**

| Patent document cited in search report | | | Publication date (day/month/year) | Patent family member(s) | Publication date (day/month/year) |
|---|---|---|---|---|---|
| CN | 108810654 | A | 13 November 2018 | None | |
| CN | 105451035 | A | 30 March 2016 | None | |
| CN | 103379325 | A | 30 October 2013 | None | |
| US | 2018285537 | A1 | 04 October 2018 | None | |

Form PCT/ISA/210 (patent family annex) (January 2015)